# EUROPEAN PATENT SPECIFICATION

(11) **EP 3 082 294 B1**
(45) Date of publication and mention of the grant of the patent: **29.04.2020**
(21) Application number: 16159185.4
(22) Date of filing: 08.03.2016
(51) Int. Cl.: H04L 12/12, H04L 29/06, G06F 1/26, G06F 1/32, G06F 21/57

(54) **ELECTRONIC APPARATUS, WAKE-UP APPARATUS FOR TURNING ON ELECTRONIC APPARATUS, WAKE-UP SYSTEM, AND CONTROL METHOD THEREOF**
ELEKTRONISCHE VORRICHTUNG, AUFWECKVORRICHTUNG ZUM EINSCHALTEN EINER ELEKTRONISCHEN VORRICHTUNG, AUFWECKSYSTEM UND STEUERUNGSVERFAHREN DAFÜR
APPAREIL ÉLECTRONIQUE, APPAREIL DE RÉVEIL POUR ACTIVER UN APPAREIL ÉLECTRONIQUE, SYSTÈME DE RÉVEIL ET SON PROCÉDÉ DE COMMANDE

(30) Priority: 15.04.2015 KR 20150053324
(43) Date of publication of application: 19.10.2016
(73) Proprietor: Samsung Electronics Co., Ltd., Gyeonggi-do 16677 (KR)
(72) Inventor: KIM, Ki-hun, Suwon-si (KR); LEE, Jin, Suwon-si (KR)
(74) Representative: Appleyard Lees IP LLP

(56) References cited:
- US-A- 6 101 608
- US-B1- 6 311 276
- US-B1- 6 366 957

## Description

### CROSS-REFERENCE TO RELATED APPLICATION

This application claims priority from Korean Patent Application No. 10-2015-0053324, filed on April 15, 2015 in the Korean Intellectual Property Office.

### BACKGROUND

### Field

Apparatuses and methods consistent with exemplary embodiments relate to an electronic apparatus capable of preventing an external invasion, a wake-up apparatus for controlling the electronic apparatus, a wake-up system, and control methods thereof.

### Description of the Related Art

Due to technological advancements, multiple electronic apparatuses are often used in home or office environments. These electronic apparatuses may be connected to an external apparatus through a network. When a user is outside, the user may remotely control an operation of an electronic apparatus in a home or an office by using an external apparatus.

Electronic apparatuses have supported a Wake On Local Area Network (LAN) (hereinafter, referred to as a WOL) to remotely turn on an electronic apparatus that is in a turn-off state. The WOL may refer to technology capable of turning on power of several electronic apparatuses positioned in remote places by a manager, or changing a computer from a power saving mode to a normal state.

Data in a format called a magic packet, which includes an MAC address of an electronic apparatus to be turned on, is broadcast through an access point (AP) to perform a WOL technique.

However, according to conventional WOL techniques, if only an MAC address of an electronic apparatus to be turned on is known, anyone may turn on the power of the corresponding electronic apparatus through a magic packet. Therefore, the electronic apparatus may be exposed to an attack of a malicious cracker. As a result, a password may be set in a magic packet so that the power may not be turned on through another apparatus except by an apparatus having a known password. However, if a password is taken once by hacking (e.g., sniffing, etc.), the password may be continuously exposed to attacks of crackers.

Therefore, there is a use for a WOL technology for which a security level has been strengthened to prevent power of an electronic apparatus from being turned on from an unspecified device. US 6101608, US 6311276 B1 and US 6366957 B1 disclose systems for secure remote wake-up of a computer over a network.

### SUMMARY

Exemplary embodiments address at least the above disadvantages and other disadvantages not described above. Also, exemplary embodiments are not required to overcome the disadvantages described above, and exemplary embodiments may not overcome any of the problems described above.

One or more exemplary embodiments provide an electronic apparatus whose security has been strengthened to turn on power thereof through only a particular device, a wake-up apparatus for turning on the electronic apparatus, a wake-up system, and control methods thereof.

According to the present invention there is provided an apparatus, a method and a system as set forth in the appended claims. Other features of the invention will be apparent from the dependent claims, and the description which follows.

According to an aspect of an example disclosed herewith, there is provided an electronic apparatus including a communicator configured to communicate with a wake-up apparatus and to be supplied with regular power when the electronic apparatus is turned off; and a processor configured to, in response to receiving a wake-up packet from the wake-up apparatus when the electronic apparatus is turned off, turn on based on a random nonce value included in the received wake-up packet, and to exchange a new random nonce value with the wake-up apparatus, wherein the new random nonce value is to be used in response to the electronic apparatus being turned on a second time by the wake-up apparatus.

The communicator is further configured to communicate with a plurality of wake-up apparatuses, and the processor is further configured to exchange a plurality of random nonce values with the plurality of wake-up apparatuses.

The processor may be further configured to exchange the new random nonce value according to at least one of a method of generating the new random nonce value and transmitting the new random nonce value to the wake-up apparatus, and a method of receiving the new random nonce value generated by the wake-up apparatus.

The processor may be further configured to be turned on to generate the new random nonce value and transmit the new random nonce value to the wake-up apparatus.

According to an example disclosed herewith, there is provided a method of controlling an electronic apparatus, the method including: receiving a wake-up packet from a wake-up apparatus, through a network interface card (NIC) configured to be supplied with regular power, when the electronic apparatus is turned off; turning on the electronic apparatus based on a random nonce value included in the received wake-up packet; and exchanging a new random nonce value with the wake-up apparatus, wherein the new random nonce value is to be used in response to the electronic apparatus being turned on a second time by the wake-up apparatus.

The NIC communicates with a plurality of wake-up apparatuses, and the exchanging the random nonce value with the wake-up apparatus includes exchanging a plurality of random nonce values with the plurality of wake-up apparatuses.

The exchanging the new random nonce value may include at least one of a method of generating the new random nonce value and transmitting the new random nonce value to the wake-up apparatus, and a method of receiving the new random nonce value generated by the wake-up apparatus.

The exchanging the new random nonce value with the wake-up apparatus may include generating the new random nonce value and transmitting the new random nonce value to the wake-up apparatus in response to the electronic apparatus being turned on.

According to an example disclosed herewith, there is provided a wake-up apparatus for turning on an electronic apparatus, including: a communicator configured to communicate with the electronic apparatus; and a processor configured to: transmit a wake-up packet to the electronic apparatus when the electronic apparatus is turned off; turn on the electronic apparatus based on a random nonce value in the wake-up packet; and exchange a new random nonce value with the electronic apparatus in response to the electronic apparatus being turned on, wherein the new random nonce value is to be used in response to the electronic apparatus being turned on a second time by the wake-up apparatus.

The processor may be further configured to exchange the new random nonce value with the electronic apparatus according to at least one of a method of generating the new random nonce value and transmitting the new random nonce value to the electronic apparatus, and a method of receiving the new random nonce value generated by the electronic apparatus.

The processor may be further configured to, in response to receiving a notification signal from the electronic apparatus indicating that the electronic apparatus is turned on, generate a new random nonce value and transmit the new random nonce value to the electronic apparatus.

According to an example disclosed herewith, there is provided a method of controlling a wake-up apparatus for turning on an electronic apparatus, the method including: transmitting a wake-up packet to the electronic apparatus when the electronic apparatus is turned off; and in response to the electronic apparatus being turned on based on a random nonce value included in the wake-up packet, exchanging a new random nonce value with the electronic apparatus, wherein the new random nonce value is to be used in response to the electronic apparatus being turned on a second time by the wake-up apparatus.

The new random nonce value may be exchanged with the electronic apparatus according to at least one of a method of generating the new random nonce value and transmitting the new random nonce value to the electronic apparatus, and a method of receiving the new random nonce value generated by the electronic apparatus.

The exchanging the new random nonce value with the electronic apparatus may include generating the new random nonce value and transmitting the new random nonce value to the electronic apparatus in response to receiving a signal from the electronic apparatus for notifying that the electronic apparatus is turned on.

According to an example disclosed herewith, there is provided a wake-up system including: an electronic apparatus; a wake-up apparatus configured to transmit a wake-up packet to the electronic apparatus, wherein the electronic apparatus is configured to receive the wake-up packet through a network interface card supplied with regular power, and to turn on based on a random nonce value included in the received wake-up packet, and wherein the wake-up apparatus and the electronic apparatus exchange a new random nonce value, which is to be used in response to the electronic apparatus being turned on a second time by the wake-up apparatus.

According to an example disclosed herewith, there is provided a method of waking up an electronic apparatus, the method including: receiving a wake-up packet from a wake-up apparatus; comparing a random nonce value provided in the wake-up packet to a pre-exchanged random nonce value; determining whether to turn on the electronic apparatus according to a result of the comparing; and exchanging a new random nonce value with the external device.

The method may include receiving another wake-up packet from the wake-up apparatus that includes another new random nonce value; and turning on the electronic apparatus according to whether the another new random nonce value matches the exchanged new random nonce value.

The method may include comparing a media access control (MAC) address included in the wake-up packet and an MAC address of the electronic apparatus; and determining whether to turn on the electronic apparatus according to a result of the comparing the MAC addresses.

The MAC address of the electronic apparatus and the exchanged new random nonce value may be stored in an electrically erasable and programmable read-only memory.

A new random nonce value may be exchanged between the electronic apparatus and the wake-up apparatus each time the electronic apparatus is turned on.

### BRIEF DESCRIPTION OF THE DRAWINGS

The above and/or other aspects of exemplary embodiments will be more apparent by describing exemplary embodiments with reference to the accompanying drawings, in which:
FIG. 1 is a block diagram of a configuration of an electronic apparatus according to an exemplary embodiment;
FIG. 2 is a block diagram of a configuration of a wake-up apparatus according to an exemplary embodiment;
FIG. 3 is a block diagram of a configuration of a wake-up system according to an exemplary embodiment;
FIG. 4 illustrates a wake-up system including a plurality of wake-up apparatuses according to another exemplary embodiment;
FIG. 5 illustrates a structure of a wake-up packet according to an exemplary embodiment;
FIG. 6 illustrates a method of connecting an electronic apparatus and a wake-up apparatus to each other according to an exemplary embodiment;
FIG. 7 illustrates a process of exchanging a random nonce value between an electronic apparatus and a wake-up apparatus, according to an exemplary embodiment;
FIG. 8 illustrates a process of transmitting a wake-up packet including an exchanged random nonce value, according to an exemplary embodiment;
FIG. 9 is a block diagram of a detailed configuration of an electronic apparatus, according to an exemplary embodiment;
FIG. 10 is a flowchart of a method of controlling an electronic apparatus according to an exemplary embodiment; and
FIG. 11 is a flowchart of a method of controlling a wake-up apparatus according to an exemplary embodiment.

### DETAILED DESCRIPTION OF EXEMPLARY EMBODIMENTS

One or more exemplary embodiments will be described below in greater detail with reference to the accompanying drawings.

In the description below, same drawing reference numerals are used to describe same elements in different drawings. The matters defined in the description, such as detailed construction and elements, are provided to assist in a comprehensive understanding. Thus, it should be apparent that exemplary embodiments may be carried out with or without the specifically defined matters.

The exemplary embodiments may be diversely modified. One or more exemplary embodiments are illustrated in the drawings and are described in detail in the detailed description. However, it is to be understood that the present disclosure is not limited to an exemplary embodiment. Well-known functions or constructions may not be described in detail if they would obscure the disclosure.

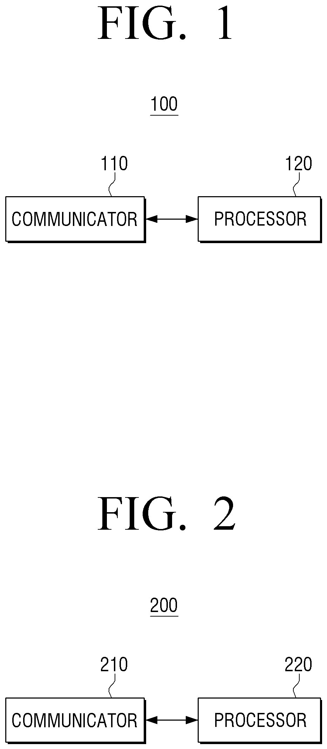

FIG. 1 is a block diagram of a configuration of an electronic apparatus 100 according to an exemplary embodiment.

Referring to FIG. 1, the electronic apparatus 100 includes a communicator 110 and a processor 120.

The electronic apparatus 100 may be realized as various types of communicable apparatuses (e.g., a desktop computer, a laptop computer, a mobile computing apparatus, a smartphone, a feature phone, a tablet computer, a set-top box, a wearable device, etc.) that are capable of realizing a Wake On Local Area Network (WOL) function for turning on power through an external apparatus connected through an access point (AP), or the like.

The communicator 110 communicates with a wake-up apparatus to turn on the electronic apparatus 100. The communicator 110 may be supplied with regular power to perform a network operation even when the electronic apparatus 100 is turned off. In other words, although all devices in the electronic apparatus 100 are turned off, the communicator 110 may be continuously supplied with power from a power supply to operate in a sleep mode in which a small amount of power is consumed. Here, if a wake-up packet is received through a network interface card (NIC), or the like, included in the communicator 110, the processor 120 senses the wake-up packet to automatically turn on a switch to turn on the electronic apparatus 100. The NIC is an extended network card that is installed in the electronic apparatus 100 to enable an access to a network in a WOL. The NIC may connect the electronic apparatus 100 and wake-up apparatuses to a network and independently perform packet transmitting and receiving, frame filtering, etc.

A turn-on state of the electronic apparatus 100 refers to a state in which the power of the electronic apparatus 100 is turned on and refers to a state in which power is supplied to a main board including main parts such as a central processing unit (CPU), a microprocessor, a coprocessor, a memory, etc., to operate the electronic apparatus 100 in a usable state, i.e., a state in which booting is completed. When the electronic apparatus 100 is turned on, the CPU is reset, a basic input/output system (BIOS) stored in a read only memory (ROM) is executed, and booting is completed through a process of transmitting a booting program and an operating system (O/S) of an auxiliary memory to a main memory. If the electronic apparatus 100 does not need to be booted, the turn-on state may refer to a state in which power is supplied to the main board, or the like.

On the contrary, the turn-off state of the electronic apparatus 100 refers to a state in which the power of the electronic apparatus 100 is turned off, i.e., a state in which the electronic apparatus 100 is not booted. Also, if the electronic apparatus 100 does not need to be booted, a turn-off state of the electronic apparatus 100 may refer to a state in which power is not supplied to the main board, or the like. When the electronic apparatus 100 is turned off, the communicator 110 may receive a wake-up packet from a wake-up apparatus for turning on the electronic apparatus 100, and perform processing for generating and transmitting a response to the wake-up packet. Here, the wake-up packet may refer to a magic packet that is a particular data packet including an MAC address of the electronic apparatus 100. For example, the magic packet may be realized as a packet in which 0xFF continues 6 times in any place of the packet according to an appointment, and an MAC address of an electronic apparatus to be turned on continues 16 times. Here, the wake-up packet may be broadcast through an AP to be received by the electronic apparatus 100.

According to an exemplary embodiment, the NIC included in the communicator 110 may sense the wake-up packet by using at least one selected from an Ethernet module and a Wi-Fi module, and realize a function for turning on the electronic apparatus 100 according to the sensed wake-up packet. For this, the Ethernet module or the Wi-Fi module may process various types of communication protocols.

The communicator 110 may exchange information about a password with a particular device to enable only the particular device to turn on the electronic apparatus 100.

The processor 120 controls an overall operation of the electronic apparatus 100.

If the wake-up packet for turning on the electronic apparatus 100 is received from the wake-up apparatus through the communicator 110 when the electronic apparatus 100 is turned off, the processor 120 may be turned on based on a random nonce value of the received wake-up packet.

Here, the random nonce value is a random value that is generated by using random numbers to secure freshness and security of a communication session and corresponds to a password that is set between an electronic apparatus and a wake-up apparatus. The electronic apparatus 100 may pre-exchange information about this random nonce value with the wake-up apparatus.

The processor 120 may compare the MAC address of the wake-up packet and the random nonce value with an MAC address of the electronic apparatus 100 and a pre-exchanged random nonce value. Therefore, the processor 120 may be turned on only if the MAC address of the wake-up packet and the random nonce value correspond to the MAC address of the electronic apparatus 100 and the pre-exchanged random nonce value. If the MAC addresses correspond to each other but the random nonce values do not correspond to each other, the processor 120 may not be turned on. The MAC address and the pre-exchanged random nonce value may be stored in an electrically erasable and programmable ROM (EEPROM), or the like.

The processor 120 may exchange a new random nonce value with the wake-up apparatus to newly set a random nonce value. Here, the new random nonce value is used when the electronic apparatus 100 is turned again on by the wake-up apparatus. In other words, the random nonce value may be updated as different values whenever the electronic apparatus 100 is turned on by the wake-up apparatus. As the MAC addresses and the random nonce values correspond to one another, the processor 120 may be turned on to generate a new random nonce value and transmit the new random nonce value to the wake-up apparatus.

Therefore, although a random nonce value or an encoded random nonce value is exposed to another device by sniffing, or the like, the random nonce value is newly updated, and thus an attack of a third person who accesses an AP may be prevented. The wake-up apparatus receives the newly updated random nonce value from the electronic apparatus 100 and knows the newly updated random nonce value. Therefore, the wake-up apparatus may transmit a wake-up packet including the newly updated random nonce value to the electronic apparatus 100 to turn on the electronic apparatus 100.

To receive the new random nonce value, the wake-up apparatus may exist in a network through which the wake-up apparatus may communicate with the electronic apparatus 100. To secure this, the generation and transmission of the new random nonce value may be performed simultaneously with turning on of the electronic apparatus 100.

The new random nonce value may be generated by the wake-up apparatus and then transmitted to the electronic apparatus 100. If the electronic apparatus 100 is turned on according to a correspondence between an MAC address and a random nonce value, the electronic apparatus 100 may transmit a notification signal for notifying that the electronic apparatus 100 is turned on, to the wake-up apparatus. The wake-up apparatus that receives the notification signal may newly update the random nonce value and transmit the updated nonce value to the electronic apparatus 100.

FIG. 2 is a block diagram of a configuration of a wake-up apparatus 200 according to an exemplary embodiment.

Referring to FIG. 2, the wake-up apparatus 200 includes a communicator 210 and a processor 220.

The wake-up apparatus 200 is an apparatus for remotely turning on the electronic apparatus 100 and may be connected to the electronic apparatus 100 through an AP. Like the electronic apparatus 100, the wake-up apparatus 200 may include various types of communicable apparatuses (e.g., a desktop computer, a laptop computer, a mobile computing apparatus, a smartphone, a feature phone, a tablet computer, a set-top box, a wearable device, etc.) that may realize a WOL function.

The communicator 210 communicates with the electronic apparatus 100. The communicator 210 may transmit a wake-up packet to the electronic apparatus 100 for turning on the electronic apparatus 100, or may transmit a newly set random nonce value to the electronic apparatus 100. Here, the newly set random nonce value will be used when the electronic apparatus 100 is turned on again.

If the electronic apparatus 100 has a dynamic IP, an IP address of the electronic apparatus 100 disappears when power of the electronic apparatus 100 is turned off. Therefore, the communicator 210 may transmit the wake-up packet to the electronic apparatus 100 according to a method of broadcasting the wake-up packet to a particular IP band through an AP that is set to transmit a magic packet. Here, the wake-up packet may include a random nonce value that is pre-exchanged between the electronic apparatus 100 and the wake-up apparatus 200.

If the electronic apparatus 100 is turned on, the processor 220 may control to exchange a new random nonce value with the wake-up apparatus 200 based on the random nonce value included in the wake-up packet. Here, the new random nonce value will be used when the electronic apparatus 100 is turned on again by the wake-up apparatus 200.

In other words, the processor 220 may update an existing random nonce value as a new random nonce value according to a method of generating a new random nonce value and transmitting the new random nonce value to the electronic apparatus 100 or receiving a new random nonce value generated by the electronic apparatus 100. Here, the newly updated random nonce value may be included in the wake-up packet and then transmitted to the electronic apparatus 100.

To transmit or receive a new random nonce value, the wake-up apparatus 200 may exist in a network through which the wake-up apparatus 200 may communicate with the electronic apparatus 100. Therefore, the generation and transmission of the new random nonce value may be performed simultaneously with turning on the electronic apparatus 100. In detail, the processor 220 may receive a notification signal that the electronic apparatus 100 is turned on, from the electronic apparatus 100, generate a new random nonce value, and transmit the new random nonce value to the electronic apparatus 100.

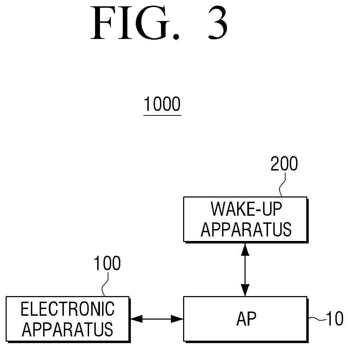

FIG. 3 is a block diagram of a configuration of a wake-up system 1000 according to an exemplary embodiment. Descriptions of the same elements of FIG. 3 as those of the elements of FIGS. 1 and 2 are omitted.

As shown in FIG. 3, the wake-up system 1000 may include an electronic apparatus 100 and a wake-up apparatus 200. An AP 10 may be disposed between the electronic apparatus 100 and the wake-up apparatus 200.

Referring to FIG. 3, the wake-up apparatus 200 transmits a wake-up packet for turning on the electronic apparatus 100 to the electronic apparatus 100. If the electronic apparatus 100 receives the wake-up packet when being turned off, the electronic apparatus 100 is turned on based on the random nonce value included in the received wake-up packet.

Here, if the electronic apparatus 100 is turned on, a new random nonce value may be newly set, wherein the new random nonce value will be used when the electronic apparatus 100 is turned on again by the wake-up apparatus 200.

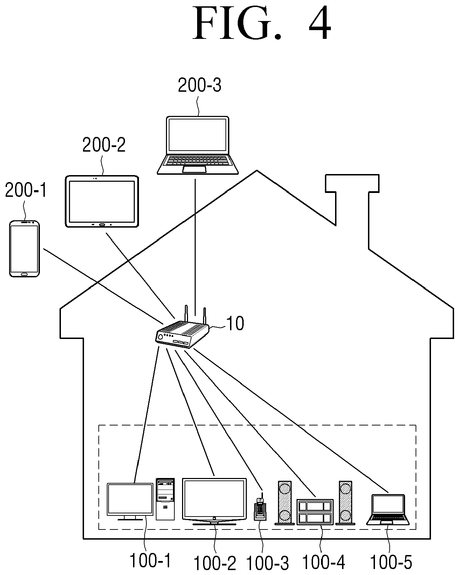

FIG. 4 illustrates a wake-up system including a plurality of wake-up apparatuses according to another exemplary embodiment.

As shown in FIG. 4, the electronic apparatus 100 may communicate with a plurality of wake-up apparatuses 200-1, 200-2, and 200-3 through the communicator 110 and may control to exchange different random nonce values with the plurality of wake-up apparatuses 200-1, 200-2, and 200-3.

The wake-up apparatuses 200-1, 200-2, and 200-3 may communicate with a plurality of electronic apparatuses 100-1, 100-2, 100-3, 100-4, and 100-5. Similarly, the wake-up apparatuses 200-1, 200-2, and 200-3 may control to exchange different random nonce values with the plurality of electronic apparatuses 100-1, 100-2, 100-3, 100-4, and 100-5.

Therefore, a user may turn on one electronic apparatus or a plurality of electronic apparatuses by using the different random nonce values that are exchanged with the plurality of wake-up apparatuses 200-1, 200-2, and 200-3. As a result, a security may be further strengthened.

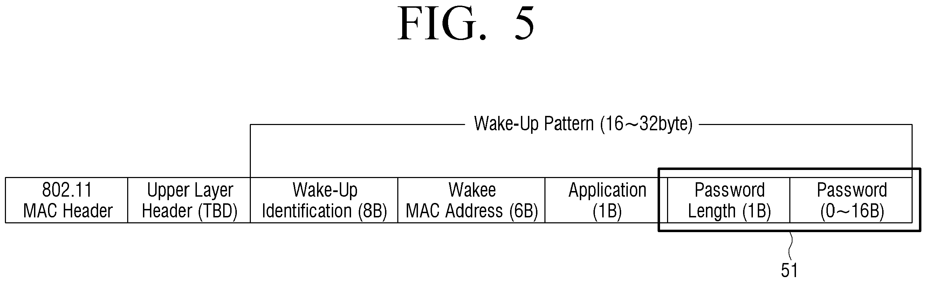

FIG. 5 illustrates a structure of a wake-up packet according to an exemplary embodiment.

The wake-up apparatus 200 may change an MAC address of the electronic apparatus 100 that is to be turned on, according to a structure of a wake-up packet. As illustrated in FIG. 5, the wake-up apparatus 200 may assign 6 0xFFs to a header part of the wake-up packet (e.g., 802.11 MAC Header) to configure the wake-up packet and transmit the wake-up packet through broadcasting. The wake-up packet may include an Upper Layer Header.

The wake-up packet may include a wake-up pattern. The wake-up pattern may include a Wake-Up Identification, a Wakee MAC Address (e.g., destination MAC Address), and a password.

An algorithm may be applied to the wake-up packet, wherein the algorithm includes a letter string (e.g., a magic byte stream) in which 16 MAC addresses (e.g., Ethernet addresses) of the corresponding electronic apparatus 100 are repeated starting from 0xFF of 6 bytes for synchronization. The processor 120 of the electronic apparatus 100 may operate in a sleep mode to inspect all received packets to generate a wake signal for booting the electronic apparatus 100. The magic byte stream may be located in any place of the wake-up packet and normally exists in a data part of a user datagram protocol (UDP) or a data area of an MAC frame.

A wake-up packet according to an exemplary embodiment may further include a nonce field 51 where a random nonce value is written. The nonce field 51 may include a Password Length field where a length of the random nonce value is determined and a Password field where the random nonce value is encoded and written. In other words, the random nonce value included in the nonce field 51 may operate as a password that is set between an electronic apparatus and a wake-up apparatus and may be changed into a different value to prevent reusing of the password and strengthen security.

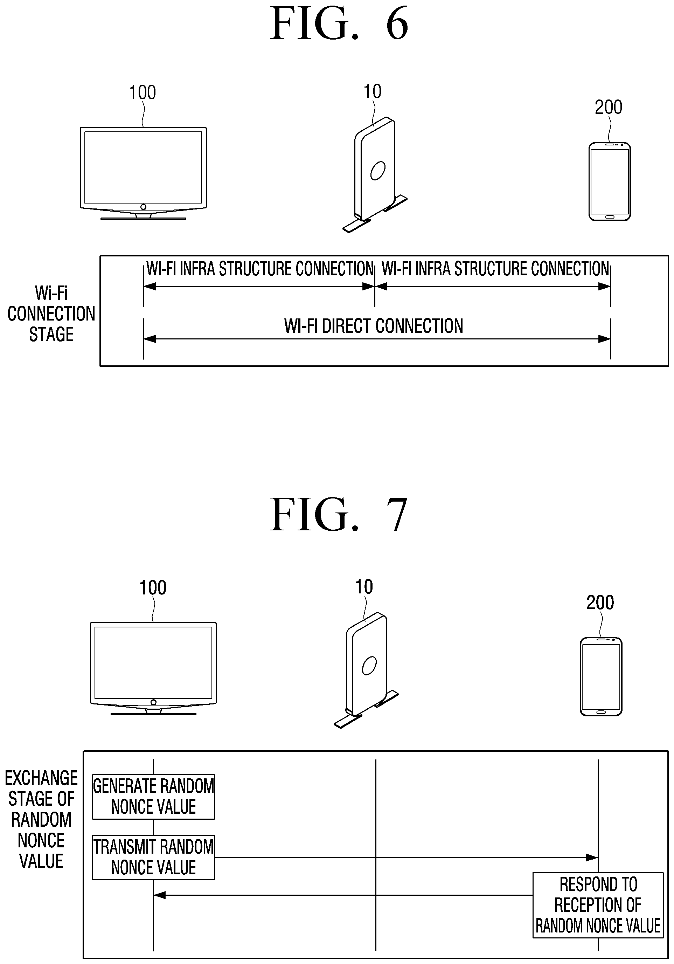

FIG. 6 illustrates a connection method between an electronic apparatus and a wake-up apparatus according to an exemplary embodiment.

The electronic apparatus 100 may be connected to the wake-up apparatus 200 for turning on the electronic apparatus 100 through a repeater such as the AP 10 or the like (e.g., an Infrastructure method). For example, the AP 10 may be realized as a wireless router that transmits a Wireless Fidelity (Wi-Fi) signal. However, the electronic apparatus 100 and the wake-up apparatus 200 may be connected to each other without the AP 10 according to a Wi-Fi direct method that is a Wi-Fi technology of a P2P concept capable of directly connecting Wi-Fi terminals.

According to an exemplary embodiment, the electronic apparatus 100 and the wake-up apparatus 200 may establish networks according to a Wi-Fi Infrastructure method to be connected to each other.

However, a connection method between the electronic apparatus 100 and the wake-up apparatus 200 is not limited to the Wi-Fi method. Therefore, the electronic apparatus 100 and the wake-up apparatus 200 may be connected to each other according to various types of communication standards such as IEEE, Bluetooth, Zigbee, 3^{rd} Generation (3G), 3^{rd} Generation Partnership Project (3GPP), Long Term Evolution (LTE), etc.

According to an exemplary embodiment, if the electronic apparatus 100 and the wake-up apparatus 200 are connected to each other or the electronic apparatus 100 is turned on, a random nonce value may be generated by one of the electronic apparatus 100 and the wake-up apparatus 200 and may be exchanged between the electronic apparatus 100 and the wake-up apparatus 200 to be used when the electronic apparatus 100 is turned on again.

FIG. 7 illustrates a process of exchanging a random nonce value between an electronic apparatus and a wake-up apparatus according to an exemplary embodiment.

A new random nonce value, which will be used when the electronic apparatus 100 is turned on again, may be classified into a method of generating the new random nonce value by the electronic apparatus 100 and transmitting the new random nonce value to the wake-up apparatus 200, and a method of generating the new random nonce value by the wake-up apparatus 200 and transmitting the new random nonce value to the electronic apparatus 100.

FIG. 7 illustrates a method of generating a random nonce value through the electronic apparatus 100. As shown in FIG. 7, if the electronic apparatus 100 is connected to the wake-up apparatus 200 that is authenticated or is turned on based on a random nonce value, the electronic apparatus 100 newly generates a random nonce value and transmits the random nonce value to the wake-up apparatus 200. The wake-up apparatus 200 may receive the new random nonce value, generate a response signal to the new random nonce value, and transmit the response signal to the electronic apparatus 100. Also, if the electronic apparatus 100 receives the response signal, the wake-up apparatus 200 may update an existing random nonce value as a new random nonce value. Here, the electronic apparatus 100 may transmit an update signal indicating that an existing random nonce value is updated as a new random nonce value, to the wake-up apparatus 200.

The wake-up apparatus 200 may transmit a wake-up packet including a new random nonce value to the electronic apparatus 100, and the electronic apparatus 100 may be turned on based on the wake-up packet. Therefore, whenever the electronic apparatus 100 is turned on by the wake-up apparatus 200, an existing password (e.g., an existing random nonce value) may be discarded, and a newly appointed password (e.g., a new random nonce value) may be set between the electronic apparatus 100 and the wake-up apparatus 200.

A random nonce value may be generated by the wake-up apparatus 200. For example, if the electronic apparatus 100 is connected to the authenticated wake-up apparatus 200 or is turned on based on an existing random nonce value, the electronic apparatus 100 may transmit a notification signal notifying that the electronic apparatus 100 is turned on, to the wake-up apparatus 200. If the wake-up apparatus 200 receives the notification signal, the wake-up apparatus 200 may generate a new random nonce value and transmit the new random nonce value to the electronic apparatus 100. The electronic apparatus 100 may receive the new random nonce value, generate a response signal to the new random nonce value, and transmit the response signal to the wake-up apparatus 200. If the wake-up apparatus 200 receives the response signal, the wake-up apparatus 200 updates the existing random nonce value as the new random nonce value.

The wake-up apparatus 200 may transmit a wake-up packet including the new random nonce value to the electronic apparatus 100.

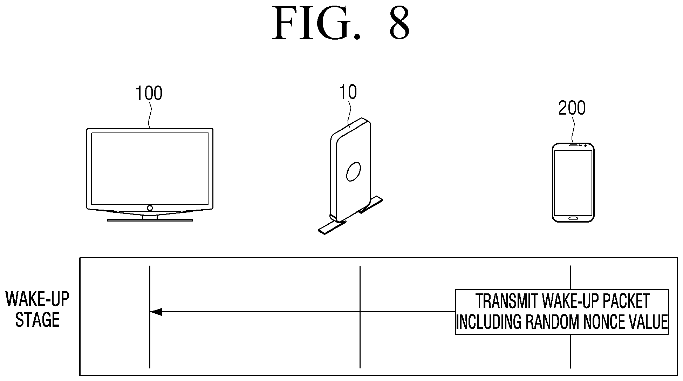

FIG. 8 illustrates a process of transmitting a wake-up packet including an exchanged random nonce value according to an exemplary embodiment.

As shown in FIG. 8, the wake-up apparatus 200 may include a pre-exchanged random nonce value in a wake-up packet and then transmit the random nonce value to the electronic apparatus 100. Here, the random nonce value may be encoded and written in a password field added into the wake-up packet.

Here, the random nonce value may be newly generated and exchanged to be updated whenever the electronic apparatus 100 is turned on. Therefore, if a third person maliciously accesses to take a broadcast wake-up packet, and a random nonce value is exposed by hacking using a method of reading a password field, a random nonce value, which is required to be authenticated to turn on the electronic apparatus 100, is newly updated when the electronic apparatus 100 is turned on next time. Therefore, another device may not turn on the electronic apparatus 100 except the wake-up apparatus 200 that exchanges a new random nonce value.

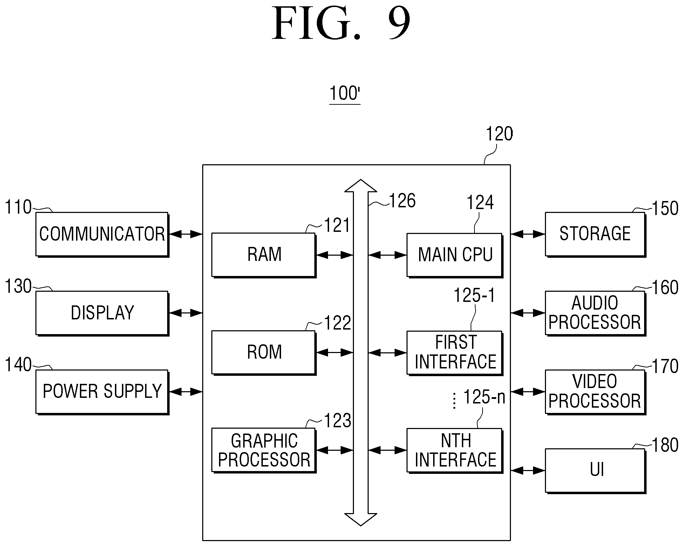

FIG. 9 is a block diagram of a detailed configuration of an electronic apparatus 100' according to another exemplary embodiment. As shown in FIG. 9, the electronic apparatus 100' includes a communicator 110, a processor 120, a display 130, a power supply 140, a storage 150 (e.g., memory), an audio processor 160, a video processor 170, and a user interface (Ul) 180.

The communicator 110 may communicate with various types of wake-up apparatuses according to various types of communication methods. In particular, the communicator 110 may include an NIC that is an extended network card installed in the electronic apparatus 100 to access a network. The NIC may be supplied with regular power to perform a network operation even when the electronic apparatus 100 is turned on. The communicator 110 may include various types of communication chips, such as a Wi-Fi chip, a Bluetooth chip, a near field communication (NFC) chip, a wireless communication chip, an Ethernet chip, etc. These chips may be included in the NIC. Here, the Wi-Fi chip, the Bluetooth chip, and the NFC chip respectively perform communications according to a Wi-Fi method, a Bluetooth method, and an NFC method. Among these chips, the NFC chip refers to a chip that operates according to an NFC method using a band of 13.56 MHz among various types of radio frequency identification (RFID) frequency bands such as 135 kHz, 13.56 MHz, 433 MHz, 860 MHz to 960 MHz, 2.45 GHz, etc.

If the Wi-Fi chip or the Bluetooth chip is used, the communicator 110 may transmit and receive various types of connection information, such as a subsystem identification (SSID), a session key, etc., connect communications by using the various types of connection information, and transmit and receive various types of information. The wireless communication chip refers to a chip that performs communications according to various types of communication standards such as IEEE, Zigbee, 3G, 3GPP, LTE, etc.

The processor 120 controls an overall operation of the electronic apparatus 100' by using various types of modules stored in the storage 150.

As shown in FIG. 9, a random access memory (RAM) 121, a ROM 122, a graphic processor 123, a main CPU 124, and first through n^{th} interfaces 125-1 through 125-n of the processor 120 may be connected to one another through a bus 126.

The ROM 122 stores a command set, etc., for booting a system. The main CPU 124 copies various types of application programs stored in the storage 150 into the RAM 121 and executes the application programs copied into the RAM 121 to perform various types of operations. Also, the ROM 122 may store a nonce algorithm for generating a new random nonce value when the electronic apparatus 100' is turned on again by one wake-up apparatus 200 or a plurality of wake-up apparatuses 200.

The graphic processor 123 generates a screen including various types of objects, such as an icon, an image, a text, etc., by using an operator and a renderer. The operator calculates attribute values, such as coordinate values, shapes, sizes, colors, etc., at which the objects are to be respectively displayed according to a layout of the screen. The renderer generates a screen having various types of layouts including objects based on the attribute values calculated by the operator.

The main CPU 124 accesses the storage 150 to perform booting by using an O/S stored in the storage 150. The main CPU 124 performs various types of operations by using various types of programs, contents, data, etc., stored in the storage 150.

The first through n^{th} interfaces 125-1 through 125-n are connected to various types of elements described above. One of the first through n^{th} interfaces 125-1 through 125-n may be a network interface that is connected to an external apparatus through a network.

The display 130 displays broadcast content, etc. The display 130 may be realized as a liquid crystal display panel (LCDP), an organic light-emitting diode (OLED), or the like, but is not limited thereto. The display 130 may also be realized as a flexible display, a transparent display, or the like.

The power supply 140 supplies power to the electronic apparatus 100'. In particular, if a wake-up signal is generated from the processor 120 according to a reception of a wake-up packet, the power supply 140 may supply power to each device of the electronic apparatus 100'. The power supply 140 may be configured to regularly supply power to some modules of the communicator 110 and the processor 120. Therefore, even when the electronic apparatus 100' is turned off, the communicator 110 may be regularly supplied with power and thus may receive a wake-up packet from a wake-up apparatus. Also, if the processor 120 performs jobs in a user area (e.g., an application layer) and a kernel area (e.g., an Internet protocol (IP) layer, a transmission control protocol (TCP) layer, or the like) of several layers of a network stack, power may be regularly supplied to a network module included in the processor 120.

The storage 150 may store a random nonce value that will be used when the electronic apparatus 100' is turned on again by one wake-up apparatus 200 or a plurality of wake-up apparatuses 200 and may store various types of modules for driving the electronic apparatus 100'.

In detail, the storage 150 may store a base module that processes signals respectively transmitted from pieces of hardware included in the electronic apparatus 100', a storage module that manages a database (DB) or a registry, a security module, a communication module, etc. The storage 150 may also store a nonce generator module that generates a random nonce value updated whenever the electronic apparatus 100' is turned on.

The audio processor 160 processes audio data.

The video processor 170 performs various types of image processing, such as decoding, scaling, noise filtering, frame rate converting, resolution converting, etc., with respect to a content.

The UI 180 is an element that senses a user interaction for controlling an overall operation of the electronic apparatus 100'. In particular, the UI 180 may include various types of interaction sensing devices such as a camera, a microphone, a remote control signal receiver, etc.

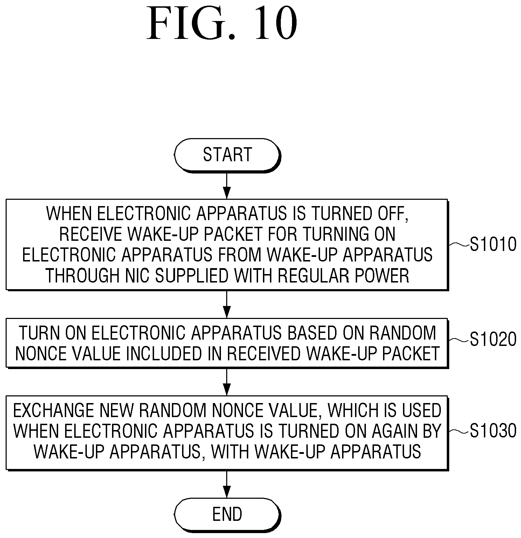

FIG. 10 is a flowchart of a method of controlling an electronic apparatus according to an exemplary embodiment.

When an electronic apparatus is turned on, the electronic apparatus receives a wake-up packet for turning on the electronic apparatus in operation S1010. Here, the wake-up packet is broadcast from a wake-up apparatus through an AP.

In operation S1020, the electronic apparatus is turned on based on a random nonce value included in the received wake-up packet. In other words, the electronic apparatus may compare MAC address information and the random nonce value included in the wake-up packet with MAC address information and a random nonce value that are pre-stored, to be turned on only if the MAC address information and the random nonce value included in the wake-up packet correspond to the pre-stored MAC information address and random nonce value.

In operation S1030, the electronic apparatus exchanges a new random nonce value with the wake-up apparatus. The new random nonce value will be used when the electronic apparatus is turned on again by the wake-up apparatus. In detail, the new random nonce value, which will be used when the electronic apparatus is turned on again by the wake-up apparatus, may be set according to a method of generating a new random nonce value and transmitting the new random nonce value to the wake-up apparatus or a method of receiving a new random nonce value generated by the wake-up apparatus. The generation and transmission of the new random nonce value may be performed simultaneously when the electronic apparatus is turned on.

The electronic apparatus may communicate with a plurality of wake-up apparatuses through an NIC. In this case, different random nonce values may be respectively set for the plurality of wake-up apparatuses.

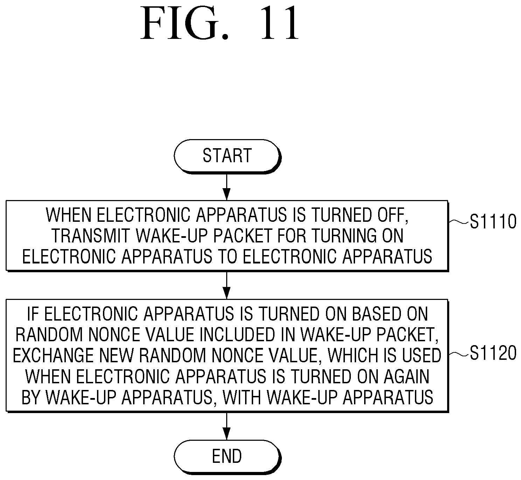

FIG. 11 is a flowchart of a method of controlling a wake-up apparatus according to an exemplary embodiment.

When an electronic apparatus is turned on, the wake-up apparatus transmits a wake-up packet for turning on the electronic apparatus to the electronic apparatus in operation S1110. The wake-up apparatus may transmit the wake-up packet to the electronic apparatus according to a method of broadcasting the wake-up packet into an particular IP band through an AP. The wake-up packet may include a random nonce value that is pre-exchanged between the electronic apparatus and the wake-up apparatus.

If the electronic apparatus is turned on based on the random nonce value included in the wake-up packet, the wake-up apparatus exchanges a new random nonce value with the electronic apparatus in operation S1120. The new random nonce value will be used when the electronic apparatus is turned on again by the wake-up apparatus. In detail, the new random nonce value, which will be used when the electronic apparatus is turned on again by the wake-up apparatus, may be set according to a method of generating a new random nonce value and transmitting the new random nonce value to the electronic apparatus or a method of receiving a new random nonce value generated by the electronic apparatus.

According to an exemplary embodiment, if the wake-up apparatus receives a notification signal for notifying that the electronic apparatus is turned on, from the electronic apparatus, the wake-up apparatus may generate a new random nonce value and transmit the new random nonce value to the electronic apparatus.

According to one or more exemplary embodiments, power of an electronic apparatus may be prevented from being turned on by an unspecified device. Also, a password may be updated by using a random nonce value to further strengthen security.

A method of controlling an electronic apparatus or a wake-up apparatus according to one or more exemplary embodiments may be embodied as a program and then stored on various types of recording media. In other words, a computer program that may be processed by various types of processors to execute the above-described various wake-up methods may be stored and used on a recording medium.

For example, there may be provided a non-transitory computer readable medium that stores a program for turning on an electronic apparatus based on a random nonce value of a wake-up packet for turning on the electronic apparatus if the wake-up packet is received from the wake-up apparatus when the electronic apparatus is turned on and for enabling a new random nonce value, which will be used when the electronic apparatus is turned on again by the wake-up apparatus, to be exchanged with the wake-up apparatus.

The non-transitory computer readable medium may be a medium which does not store data temporarily such as a register, cash, and memory but stores data semi-permanently and is readable by devices. The applications or programs may be stored in the non-transitory computer readable media such as compact disks (CDs), digital video disks (DVDs), hard disks, Blu-ray disks, universal serial buses (USBs), memory cards, and read-only memory (ROM).

The above exemplary embodiments are merely exemplary and are not to be construed as limiting. The present disclosure can be readily applied to other types of apparatuses. Also, the description of one or more exemplary embodiments is intended to be illustrative, and not to limit the scope of the claims, and many alternatives, modifications, and variations will be apparent to those skilled in the art.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same or similar purpose, unless expressly stated otherwise. Thus, unless expressly stated otherwise, each feature disclosed is one example only of a generic series of similar features.

The invention is not restricted to the details of the foregoing embodiment(s). The invention is defined in the appended claims.

## Claims

1. An electronic apparatus (100) comprising:
a communicator (110) configured to communicate with a wake-up apparatus (200) and to be supplied with regular power when the electronic apparatus (100) is turned off; and
a processor (120) configured to:
in response to receiving a wake-up packet from the wake-up apparatus (200) when the electronic apparatus (100) is turned off, turn on the electronic apparatus (100) based on a random nonce value included in the received wake-up packet,
in response to the electronic apparatus being turned on, transmit a signal for notifying that the electronic apparatus is turned on, to the wake-up apparatus, and
receive a new random nonce value from the wake-up apparatus (200) in response to the wake-up apparatus receiving the notification signal, wherein the new random nonce value is to be used in response to the electronic apparatus (100) being turned on a second time by the wake-up apparatus (200),
wherein the communicator communicates with a plurality of wake-up apparatuses, and
wherein the processor is configured to exchange a plurality of different random nonce values with the plurality of wake-up apparatuses.

2. The electronic apparatus of claim 1, wherein the processor is further configured to exchange the new random nonce value according to at least one of a method of generating the new random nonce value and transmitting the new random nonce value to the wake-up apparatus, and a method of receiving the new random nonce value generated by the wake-up apparatus.

3. The electronic apparatus of claim 2, wherein the processor is further configured to be turned on to generate the new random nonce value and transmit the new random nonce value to the wake-up apparatus.

4. A method of controlling an electronic apparatus (100), the method comprising:
receiving a wake-up packet from a wake-up apparatus (200), through a network interface card, NIC, the NIC being configured to be supplied with regular power, when the electronic apparatus (100) is turned off;
turning on the electronic apparatus (100) based on a random nonce value included in the received wake-up packet;
in response to the electronic apparatus being turned on, transmitting a signal for notifying that the electronic apparatus is turned on, to the wake-up apparatus; and
receiving a new random nonce value from the wake-up apparatus (200) in response to the wake-up apparatus receiving the notification signal, wherein the new random nonce value is to be used in response to the electronic apparatus (100) being turned on a second time by the wake-up apparatus (200),
wherein the NIC communicates with a plurality of wake-up apparatuses, and
wherein the exchanging the random nonce value with the wake-up apparatus comprises exchanging a plurality of different random nonce values with the plurality of wake-up apparatuses.

5. The method of claim 4, wherein the exchanging the new random nonce value comprises at least one of a method of generating the new random nonce value and transmitting the new random nonce value to the wake-up apparatus, and a method of receiving the new random nonce value generated by the wake-up apparatus.

6. The method of claim 5, wherein the exchanging the new random nonce value with the wake-up apparatus comprises generating the new random nonce value and transmitting the new random nonce value to the wake-up apparatus in response to the electronic apparatus being turned on.

7. A wake-up system comprising:
an electronic apparatus (100);
a plurality of wake-up apparatuses (200), each wake-up apparatus being configured to transmit a wake-up packet to the electronic apparatus (100),
wherein the electronic apparatus (100) is configured to:
receive the wake-up packet from a wake-up apparatus (200) of the plurality of wake-up apparatuses through a network interface card being supplied with regular power, and to turn on the electronic apparatus (100) based on a random nonce value included in the received wake-up packet,
in response to the electronic apparatus being turned on, transmit a signal for notifying that the electronic apparatus is turned on, to the wake-up apparatus, and
the electronic apparatus (100) receiving a new random nonce value from the wake-up apparatus (200), wherein the new random nonce value is to be used in response to the electronic apparatus (100) being turned a second time by the wake-up apparatus (200),
wherein the wake-up apparatuses (200) and the electronic apparatus (100) exchange a plurality of different new random nonce values, and
wherein the network interface card communicates with the plurality of wake-up apparatuses.

## Patentansprüche

1. Elektronische Einrichtung (100), die Folgendes umfasst:
einen Kommunikator (110), der dazu ausgelegt ist, mit einer Aufweckeinrichtung (200) zu kommunizieren und mit regulärer Leistung versorgt zu werden, wenn die elektronische Einrichtung (100) ausgeschaltet ist; und
einen Prozessor (120), der zu Folgendem ausgelegt ist:
als Reaktion auf Empfangen eines Aufweckpakets von der Aufweckeinrichtung (200), wenn die elektronische Einrichtung (100) ausgeschaltet ist, Einschalten der elektronischen Einrichtung (100) basierend auf einem in dem empfangenen Aufweckpaket enthaltenen zufälligen Nonce-Wert,
als Reaktion darauf, dass die elektronische Einrichtung eingeschaltet wird, Übertragen eines Signals zum Mitteilen, dass die elektronische Einrichtung eingeschaltet ist, an die Aufweckeinrichtung, und
Empfangen eines neuen zufälligen Nonce-Werts von der Aufweckeinrichtung (200) als Reaktion darauf, dass die Aufweckeinrichtung das Mitteilungssignal empfängt, wobei der neue zufällige Nonce-Wert als Reaktion darauf zu verwenden ist, dass die elektronische Einrichtung (100) ein zweites Mal durch die Aufweckeinrichtung (200) eingeschaltet wird,
wobei der Kommunikator mit mehreren Aufweckeinrichtungen kommuniziert, und
wobei der Prozessor dazu ausgelegt ist, mehrere verschiedene zufällige Nonce-Werte mit den mehreren Aufweckeinrichtungen auszutauschen.

2. Elektronische Einrichtung nach Anspruch 1, wobei der Prozessor ferner dazu ausgelegt ist, den neuen zufälligen Nonce-Wert gemäß einem Verfahren zum Erzeugen des neuen zufälligen Nonce-Werts und Übertragen des neuen zufälligen Nonce-Werts an die Aufweckeinrichtung und/oder einem Verfahren zum Empfangen des durch die Aufweckeinrichtung erzeugten neuen zufälligen Nonce-Werts auszutauschen.

3. Elektronische Einrichtung nach Anspruch 2, wobei der Prozessor ferner dazu ausgelegt ist, eingeschaltet zu werden, um den neuen zufälligen Nonce-Wert zu erzeugen und den neuen zufälligen Nonce-Wert an die Aufweckeinrichtung zu übertragen.

4. Verfahren zum Steuern einer elektronischen Einrichtung (100), wobei das Verfahren Folgendes umfasst:
Empfangen eines Aufweckpakets von einer Aufweckeinrichtung (200) durch eine Netzwerkschnittstellenkarte bzw. NIC (Network Interface Card), wobei die NIC dazu ausgelegt ist, mit regulärer Leistung versorgt zu werden, wenn die elektronische Einrichtung (100) ausgeschaltet ist;
Einschalten der elektronischen Einrichtung (100) basierend auf einem in dem empfangenen Aufweckpaket enthaltenen zufälligen Nonce-Wert;
als Reaktion darauf, dass die elektronische Einrichtung eingeschaltet wird, Übertragen eines Signals zum Mitteilen, dass die elektronische Einrichtung eingeschaltet ist, an die Aufweckeinrichtung; und
Empfangen eines neuen zufälligen Nonce-Werts von der Aufweckeinrichtung (200) als Reaktion darauf, dass die Aufweckeinrichtung das Mitteilungssignal empfängt, wobei der neue zufällige Nonce-Wert als Reaktion darauf zu verwenden ist, dass die elektronische Einrichtung (100) ein zweites Mal durch die Aufweckeinrichtung (200) eingeschaltet wird,
wobei die NIC mit mehreren Aufweckeinrichtungen kommuniziert, und
wobei das Austauschen des zufälligen Nonce-Werts mit der Aufweckeinrichtung Austauschen mehrerer verschiedener zufälliger Nonce-Werte mit den mehreren Aufweckeinrichtungen umfasst.

5. Verfahren nach Anspruch 4, wobei das Austauschen des neuen zufälligen Nonce-Werts ein Verfahren zum Erzeugen des neuen zufälligen Nonce-Werts und Übertragen des neuen zufälligen Nonce-Werts an die Aufweckeinrichtung und/oder ein Verfahren zum Empfangen des durch die Aufweckeinrichtung erzeugten neuen zufälligen Nonce-Werts umfasst.

6. Verfahren nach Anspruch 5, wobei das Austauschen des neuen zufälligen Nonce-Werts mit der Aufweckeinrichtung Erzeugen des neuen zufälligen Nonce-Werts und Übertragen des neuen zufälligen Nonce-Werts an die Aufweckeinrichtung als Reaktion darauf, dass die elektronische Einrichtung eingeschaltet wird, umfasst.

7. Aufwecksystem, das Folgendes umfasst:
eine elektronische Einrichtung (100);
mehrere Aufweckeinrichtungen (200), wobei jede Aufweckeinrichtung dazu ausgelegt ist, ein Aufweckpaket an die elektronische Einrichtung (100) zu übertragen,
wobei die elektronische Einrichtung (100) zu Folgendem ausgelegt ist:
Empfangen des Aufweckpakets von einer Aufweckeinrichtung (200) der mehreren Aufweckeinrichtungen durch eine mit regulärer Leistung versorgte Netzwerkschnittstellenkarte, und zum Einschalten der elektronischen Einrichtung (100) basierend auf einem in dem empfangenen Aufweckpaket enthaltenen zufälligen Nonce-Wert,
als Reaktion darauf, dass die elektronische Einrichtung eingeschaltet wird, Übertragen eines Signals zum Mitteilen, dass die elektronische Einrichtung eingeschaltet ist, an die Aufweckeinrichtung, und
Empfangen, durch die elektronische Einrichtung (100), eines neuen zufälligen Nonce-Werts von der Aufweckeinrichtung (200), wobei der neue zufällige Nonce-Wert als Reaktion darauf zu verwenden ist, dass die elektronische Einrichtung (100) ein zweites Mal durch die Aufweckeinrichtung (200) gewendet wird,
wobei die Aufweckeinrichtungen (200) und die elektronische Einrichtung (100) mehrere verschiedene neue zufällige Nonce-Werte austauschen,
wobei die Netzwerkschnittstellenkarte mit den mehreren Aufweckeinrichtungen kommuniziert.

## Revendications

1. Appareil électronique (100), comprenant :
un communicateur (110) configuré pour communiquer avec un appareil de réveil (200) et être alimenté en énergie régulière lorsque l'appareil électronique (100) est hors tension ; et
un processeur (120) configuré pour :
en réponse à la réception d'un paquet de réveil en provenance de l'appareil de réveil (200) lorsque l'appareil électronique (100) est hors tension, mettre sous tension l'appareil électronique (100) sur la base d'une valeur de nonce aléatoire contenue dans le paquet de réveil reçu,
en réponse à la mise sous tension de l'appareil électronique, transmettre, à l'appareil de réveil, un signal de notification de la mise sous tension de l'appareil électronique, et
recevoir une nouvelle valeur de nonce aléatoire en provenance de l'appareil de réveil (200) en réponse à la réception, par l'appareil de réveil, du signal de notification, la nouvelle valeur de nonce aléatoire étant destinée à être utilisée en réponse à la mise sous tension une seconde fois de l'appareil électronique (100) par l'appareil de réveil (200),
le communicateur communiquant avec une pluralité d'appareils de réveil, et
le processeur étant configuré pour échanger une pluralité de valeurs de nonce aléatoires différentes avec la pluralité d'appareils de réveil.

2. Appareil électronique selon la revendication 1, dans lequel le processeur est configuré en outre pour échanger la nouvelle valeur de nonce aléatoire selon un procédé de génération de la nouvelle valeur de nonce aléatoire et de transmission de la nouvelle valeur de nonce aléatoire à l'appareil de réveil et/ou un procédé de réception de la nouvelle valeur de nonce aléatoire générée par l'appareil de réveil.

3. Appareil électronique selon la revendication 2, dans lequel le processeur est configuré en outre pour être mis sous tension pour générer la nouvelle valeur de nonce aléatoire et transmettre la nouvelle valeur de nonce aléatoire à l'appareil de réveil.

4. Procédé de commande d'un appareil électronique (100), le procédé comprenant :
la réception d'un paquet de réveil en provenance d'un appareil de réveil (200), par le biais d'une carte d'interface réseau, notée NIC, la NIC étant configurée pour être alimentée en énergie régulière lorsque l'appareil électronique (100) est hors tension ;
la mise sous tension de l'appareil électronique (100) sur la base d'une valeur de nonce aléatoire contenue dans le paquet de réveil reçu ;
en réponse à la mise sous tension de l'appareil électronique, la transmission, à l'appareil de réveil, d'un signal de notification de la mise sous tension de l'appareil électronique ; et
la réception d'une nouvelle valeur de nonce aléatoire en provenance de l'appareil de réveil (200) en réponse à la réception, par l'appareil de réveil, du signal de notification, la nouvelle valeur de nonce aléatoire étant destinée à être utilisée en réponse à la mise sous tension une seconde fois de l'appareil électronique (100) par l'appareil de réveil (200),
la NIC communiquant avec une pluralité d'appareils de réveil, et
l'échange de la valeur de nonce aléatoire avec l'appareil de réveil comprenant l'échange d'une pluralité de valeurs de nonce aléatoires différentes avec la pluralité d'appareils de réveil.

5. Procédé selon la revendication 4, dans lequel l'échange de la nouvelle valeur de nonce aléatoire comprend un procédé de génération de la nouvelle valeur de nonce aléatoire et de transmission de la nouvelle valeur de nonce aléatoire à l'appareil de réveil et/ou un procédé de réception de la nouvelle valeur de nonce aléatoire générée par l'appareil de réveil.

6. Procédé selon la revendication 5, dans lequel l'échange de la nouvelle valeur de nonce aléatoire avec l'appareil de réveil comprend la génération de la nouvelle valeur de nonce aléatoire et la transmission de la nouvelle valeur de nonce aléatoire à l'appareil de réveil en réponse à la mise sous tension de l'appareil électronique.

7. Système de réveil, comprenant :
un appareil électronique (100) ;
une pluralité d'appareils de réveil (200), chaque appareil de réveil étant configuré pour transmettre un paquet de réveil à l'appareil électronique (100),
l'appareil électronique (100) étant configuré pour :
recevoir le paquet de réveil en provenance d'un appareil de réveil (200) de la pluralité d'appareils de réveil par le biais d'une carte d'interface réseau alimentée en énergie régulière, et mettre sous tension l'appareil électronique (100) sur la base d'une valeur de nonce aléatoire contenue dans le paquet de réveil reçu,
en réponse à la mise sous tension de l'appareil électronique, transmettre, à l'appareil de réveil, un signal de notification de la mise sous tension de l'appareil électronique, et
l'appareil électronique (100) recevant une nouvelle valeur de nonce aléatoire en provenance de l'appareil de réveil (200), la nouvelle valeur de nonce aléatoire étant destinée à être utilisée en réponse à le tour une seconde fois de l'appareil électronique (100) par l'appareil de réveil (200),
les appareils de réveil (200) et l'appareil électronique (100) échangeant une pluralité de nouvelles valeurs de nonce aléatoires différentes, et
la carte d'interface réseau communiquant avec la pluralité d'appareils de réveil.
